# EUROPÄISCHE PATENTSCHRIFT

(11) **EP 0 607 933 B1**
(45) Veröffentlichungstag und Bekanntmachung des Hinweises auf die Patenterteilung: **11.12.1996**
(21) Anmeldenummer: 94100682.7
(22) Anmeldetag: 19.01.1994
(51) Int. Cl.: D03D 15/00

(54) **Textiles Gewebe für Markisen, Schirme, Zelte, Persennings und dergleichen sowie Verfahren zu dessen Herstellung**
Woven textile for marquees, screens, tents, tarpaulins and process for manufacturing the same
Tissu textile pour marquises, écrans, tentes, prélarts ainsi que son procédé de fabrication

(30) Priorität: 19.01.1993 DE 4301166
(43) Veröffentlichungstag der Anmeldung: 27.07.1994
(73) Patentinhaber: MEHLER TECHNISCHE TEXTILIEN GmbH, D-36043 Fulda (DE)
(72) Erfinder: Steinlein, Roland, D-36037 Fulda (DE); Schulz, Günter, Dr., D-30826 Fulda (DE)
(74) Vertreter: Fuchs, Luderschmidt & Partner Patentanwälte

(56) Entgegenhaltungen:
- DE-A- 3 623 997
- US-A- 3 627 605
- US-A- 4 980 227

## Beschreibung

Die vorliegende Erfindung betrifft ein textiles Gewebe für Markisen, Zelte, Schirme, Persennings und dergleichen mit einer Struktur und Zusammensetzung, die insbesondere eine hohe Umweltverträglichkeit bei der Entsorgung und eine hohe Receyclingfähigkeit garantieren.

Die an textile Gewebe, insbesondere zum Schutz gegen Witterungseinflüsse sowie Sonnenlicht und Regen zu stellenden Anforderungen, orientieren sich sowohl an technischen als auch ästhetischen Ansprüchen. Die technischen Anforderungen an solche Gewebe umfassen eine hohe Festigkeit in Kettrichtung, eine geringe statische Dehnung, eine ausreichende Wasserdichtigkeit sowie Wetterbeständigkeit und letztendlich auch eine leichte Verarbeitbarkeit. Dabei werden diese Anfoderungen sowohl durch die Eigenschaften der eingesetzten Faser, als auch durch das textile Gewebe selbst bestimmt. Durch die Natur der Faser werden Eigenschaften wie Reißfestigkeit, Reißdehnung, statische Dehnung, Farbechtkeit, Lichtechtheit und anderes beeinflußt, während Eigenschaften wie Beständigkeit gegen Pilzbefall, Griffgestaltung` Wasserdichtigkeit, Vernähbarkeit, Schmutzabweisung und andere durch die Einflußfaktoren des Gewebes inklusive der Ausrüstung bestimmt werden.

Insbesondere für Markisen, aber auch für Zelt-, Schirm- und Bootsabdeckstoffe wird derzeit von Geweben aus Polyacrylnitril-Garnen ausgegangen, die zum Beispiel aus einem 34/2-fach Garn bestehen und in einer Leinwand 1-1-Bindung oder auch einer Panama 2-2-Bindung ausgeführt sind. Diese Materialien werden anschließend an die Herstellungsstufe des Gewebes, einer Ausrüstung unterzogen, die die Verfahrensschritte Waschen und Ausrüsten umfaßt. Speziell während der Ausrüstung werden dann dem Polyacrylnitrilgewebe Benzimidazolderivate als Pilzschutz zugesetzt, Fluorcarbonharze in Verbindung mit Extendern zur Verbesserung der Wasserdichte und eine bestimmte Art von Harzen (z. B. Melaminharze) zur Ausbildung der Griffigkeit.

Der beschriebene Stand der Technik ist in dieser Form schon lange bekannt. Änderungen finden lediglich auf dem Gebiet der Produktmodifikation über die ästhetische Ausbildungsform des Produktes statt, d.h. daß eine in zeitlichen Abständen neue Vorstellung der Produkte immer nur in Form neuer Farben, neuer Farbabstufungen, neuer Streifenformen bzw. neuer Druckdesigns erfolgte. Dies gilt speziell für Markisenstoffe, die sowohl in einfarbigen, wie auch blockstreifenförmigen bzw. buntgestreiften Varianten angeboten werden.

Die Polymere der eingesetzten Garne als auch das z. B. verwendete Gewebe und die geschilderten Ausrüstungsschritte haben sich über Jahre, ja sogar Jahrzehnte nicht verändert.

Garne auf der Basis von Polyacrylnitril (PAN) erwiesen sich insbesondere auch für die nachfolgende Ausrüstung bzw. Konditionierung des Grundgewebes als vorteilhaft. PAN-Fasern weisen eine hohe Zugfestigkeit auf (2 bis 4 cN/dtex) sind knitterfrei, leicht waschbar, schnell trocknend, säure-, hitze-, lösungsmittel-, UV- und alterungsbeständig. Für Markisen und dergleichen werden aber typische, aus der Anforderung resultierende Eigenschaften, insbesondere eine hohe Griffgestaltung gefordert, welche dann für eine hohe Akzeptanz beim Verarbeiter und Verbraucher sorgen. Solche Eigenschaften werden nach dem Stand der Technik durch spezifische Ausrüstungschemikalien, wie sie in Form einer Appretur durch Eintauchen der Texilien in eine Imprägnierflotte und anschließendes Trocknen auf das textile Gewebe aufgebracht werden, dem Gewebe vermittelt.

Auch hierfür wären die Eigenschaften eines Gewebes aus PAN-Faser, infolge einer gewissen Hydrophilie des PAN-Fasergewebes vorteilhaft, da sie es gestatten, einen genügend dicken Auftrag von Ausrüstungschemikalien auf das textile Gewebe zu gewährleisten, um typische Eigenschaften wie Griffigkeit, Wasserdichtigkeit und andere für eine hohe Verbraucherakzeptanz bereitzustellen.

Das jedoch in der letzten Zeit gestiegene "Umweltbewußtsein" beim Verbraucher, insbesondere auch und gerade im Hinblick auf Umweltbelastung beim bestimmungsgemäßen Einsatz sowie bei der Entsorgung von Gebrauchsgegenständen, ließ dann auch gewisse Nachteile bei der Verwendung von PAN-Fasern für Markisen, Schirme, Zelte, Persennings und dergleichen zu Tage treten.

Die Belastungen kommen aus einem Mischprodukt mit verschiedensten Rohstoffzusammensetzungen, welche sich durch die Vielfalt der eingesetzten Komponenten, angefangen vom Garnpolymer über die Ausrüstungschemikalien bis hin zu Zusatzkomponenten bei der Konfektionierung ergeben, welche auch nach dem Gebrauch im Hinblick auf eine sortenreine Verwertung schwierig zu handhaben sind. Ein besonderer umweltbelastender Faktor ergibt sich aus der Verwendung von formaldehydhaltigen, griffgebenden Hilfsmitteln, wie sie z. B. durch veretherte Melamincarbamidharze erhalten werden und die damit in Form von schwermetallhaltigen Verbindungen, wie Zinknitrat, einzusetzenden Katalysatoren. Das Formaldehyd kann aus dem fertigen Produkt ausgasen und in die Umgebung gelangen. Dies kann zu einer Belästigung bzw. Beeinträchtigung bei der Verarbeitung der Materialien führen, insbesondere auch unter thermischer Belastung, wie sie beim Vernähen von Bahnenware auftritt. Diese Fakten sind bekannt und auch schon in letzter Zeit durch Änderung der Rezeptureinstellung und Änderung der Chemikalien seitens der Textilhilfsmittelhersteller verändert worden, auch in den jeweiligen Konzentrationen abgeschwächt, bzw. durch umweltverträglichere Komponenten ersetzt worden. So sind z. B. in der DE-PS 3 623 997 Versuche beschrieben, um durch eine veränderte Ausrüstung die Umweltverträglichkeit zu verbessern.

Der grundsätzliche Stand der Technik bei Markisenstoffen bzw. Persenningstoffen und Zeltstoffen ist recht ausführlich und auch breit in der Literatur in Form von Firmenprospekten und Veröffentlichungen beschrieben worden.

Andererseits sind aber im Stand der Technik auch Polymerfasern auf Basis von Polyolefinen bekannt, welche an sich, im Vergleich mit PAN-Garnen, durch Verbrennung relativ umweltfreundlich entsorgt werden könnten. Im Hinblick auf ihre Anwendbarkeit für Markisen, Schirme, Zelte, Persennings und dergleichen besitzen sie aber den Nachteil, daß infolge ihres ausgeprägten hydrophoben Charakters ein Auftrag von genügend hohen Konzentrationen an Ausrüstungschemikalien nicht möglich war, um die für den bestimmungsgemäßen Einsatz erforderlichen Eigenschaften, insbesondere auch zur Ausbildung der Griffigkeit, zu gewährleisten. Zusätzlich bedingen die vorzugsweise zu verwendenden Polyolefinfasern eine Temperaturlimitierung, die den Einsatz handelsüblicher Textilhilfsmittel, insbesondere zur Griffgebung, verhindert. Eine Akzeptanz für eine im Vergleich mit PAN-Fasern herabgesetzte Griffkeit war für eine solche Verwendung beim Verbraucher nicht durchzusetzen.

Der Erfindung liegt daher die Aufgabe zugrunde, ein textiles Gewebe für Markisen, Schirme, Zelte, Persennings und dergleichen zur Verfügung zu stellen, welches eine hohe Umweltverträglichkeit während seines Gebrauchs und bei der Entsorgung aufweist und über eine hohe Recyclingfähigkeit verfügt, das aber dennoch die für die nach dem bisherigen Stand der Technik verwendeten Materialien bekannten typischen Gebrauchseigenschaften, insbesondere eine hohe Griffestigkeit, aufweist. Eine weitere Aufgabe besteht in einem Verfahren zur Herstellung eines solchen textilen Gewebes.

Die Aufgabe wird in bezug auf den Gegenstand durch die kennzeichnenden Merkmale des Anspruchs 1 gelöst, im bezug auf das Verfahren nach den kennzeichnenden Merkmalen des Anspruchs 15. Bevorzugte Ausführungsformen bzw. Weiterbildungen sind in bezug auf das textile Flächengewebe in den Ansprüchen 2 bis 14 und im bezug auf das Herstellungsverfahren in den Ansprüchen 15 und 16 wiedergegeben.

Bei dem erfindungsgemäßen textilen Gewebe handelt es sich im Vergleich mit den Geweben gemäß Stand der Technik um eine gänzlich andere Produktstruktur, zu deren Herstellung dann auch ein zusätzlicher Verfahrensschritt eingesetzt werden muß.

Das eingesetzte Gewebegarn ist ein Stapelfasergarn bzw. ein daraus hergestellter Zwirn. Das Stapelfasergarn besteht erfindungsgemäß aus mindestens zwei Polymerkomponenten mit unterschiedlichem Schmelzpunkt. Die Faserkompomente mit höherem Schmelzpunkt stellt das sogenannte Matrixpolymer dar, d.h., es bestimmt vorwiegend die späteren technischen Eigenschaften - wie z.B. Festigkeiten des Fertigproduktes. Die Faserkomponente mit dem niedrigeren Schmelzpunkt fungiert im fertigen Produkt lediglich als griffgebend. Dadurch, daß bei der Herstellung des Stapelfasergarnes die mindestens zwei Faserkomponenten dem Spinnprozeß als homogene Mischung vorgelegt werden, entsteht im fertigen Garn eine intime Fasermischung. Der Zwirn entsteht durch Verdrehung von mindestens zwei derartig hergestellten Stapelfasergarnen.

Als Basispolymer für das Gewebegarn werden umweltfreundliche, ohne Schadstoffe verbrennbare Polyolefine, wie z. B. Polyethylen, Polypropylen, Polybutylen, Polyisobutylen und andere eingesetzt, welche - anders als das bisher im Stand der Technik verwendete PAN-thermoplastische Polymere darstellen und daher auch recykliert werden können. Bevorzugt eingesetzt wird Polypropylen. Der Zusatz einer Schmelzfaser, welche einen Schmelztemperaturbereich unter dem des Basispolymermaterials aufweist und in einem gesonderten Temperprozeß mit der Matrixfaser verschmolzen wird, verursacht den Übergang von einem leicht biegsamen Gewebe in ein steiferes, sprungelastisches Material. Somit wird also die Griffausrüstung des erfindungsgemäßen Gewebes dem Grundgewebe über einen verfahrensbedingten physikalischen Prozeß und nicht über chemische Ausrüstungsstoffe wie im Stand der Technik vermittelt. Mithin kann also auf die relativ hoch konzentrierten, füllenden und versteifenden chemischen Zusatzstoffe, welche bei der Entsorgung erhebliche Umweltbelastungen hervorrufen können, verzichtet werden, was neben der schadstoffreien Entsorgung des Matrixmaterials einen zusätzlichen Vorteil im Hinblick auf Umweltverträglichkeit bedeutet.

Als Schmelzfaserpolymere können selbstverständlich solche thermoplastischen Polymere in Betracht kommen, welche auch wieder relativ problemlos entsorgt werden können, also inbesondere Polyolefine selbst, aber z. B. auch Polyamide (z. B. Grilon K 140, EMS-Chemie) und Polyester. Es ist auch möglich, mehr als eine Schmelzfaserkomponente einzusetzen, sofern deren Schmelztemperaturbereiche unter dem Schmelztemperaturbereich des Matrixpolymers liegen und ihre Schmelztemperaturbereiche selbst nicht zu weit voneinander abweichen.

Das gewichtsprozentuale Verhältnis von für die Garnherstellung einzusetzendem Matrixpolymer zum Schmelzpolymer richtet sich nach den verwendeten Polymeren im Hinblick auf die zu erzielende Griffestigkeit, jedoch liegt der Matrixpolymeranteil immer über 50 Gew.%. Theoretisch ist sogar denkbar, daß er bis zu 100 Gew.% betragen kann, nämlich dann, wenn das Matrixpolymer selbst als Schmelzpolymer verwendet wird, d. h., daß sich das Grundgewebe nur aus Matrixpolymer zusammensetzt und sodann das Matrixgewebe im nachfolgenden Temperprozeß an den Faseroberflächen miteinander verschmolzen wird. Dies dürfte jedoch für die meisten Faserpolymere wegen der damit verbundenen Änderung in den Gebrauchseigenschaften nicht in Frage kommen, abgesehen von der Tatsache, daß die Temperung selbst in einem relativ eng begrenzten Temperaturbereich erfolgen müßte. In der Regel sollte das Gewebegarn aus mindestens zwei thermoplastischen Polymeren mit unterschiedlichen Schmelztemperaturbereichen bestehen, wobei dann das Polymer mit einem Anteil von über 50 Gew.% ein Polyolefin ist.

Neben dem Mischgarn kann in das Gewebe zusätzlich ein Schrumpfgarn in Kett- und/oder Schußrichtung eingewoben sein bzw. das Mischgarn selbst aus einem Schrumpfgarn bestehen, welches bei den im Herstellungsprozeß auftretenden Temperaturen einen Schrumpf von 3-12 % aufweisen kann und damit einen zusätzlichen Beitrag zur Griffverbesserung leistet.

Daneben können in das textile Gewebe noch zusätzlich metallische Komponenten eingearbeitet sein. Dies kann einerseits zur besonderen optischen Effektbildung beitragen, aber auch eine praktische Notwendigkeit sein, wie z. B. bei einer eventuellen Beheizung oder der Kontaktauslösung bei Beschädigung.

Zur Verbesserung der Wetterbeständigkeit kann das textile Gewebe mit Hydrophobierungsmitteln allein oder in Kombination mit Extendern behaftet sein. Bei besonderen Anforderungen an die Wetterbeständigkeit ist es auch denkbar, noch zusätzlich einen Kunstharzauftrag auf das textile Gewebe aufzubringen, welcher aus der Gattung der Fluorcarbonharze, Melaminharze, Carbamidharze oder deren Derivaten und Mischungen oder der Gruppe Acrylate, Polyurethane oder Polyvinylacetate gebildet sein kann.

Eine intensive Wasserdichtigkeit kann erzielt werden, wenn das textile Gewebe einseitig mit einem Polymerfilm abgedeckt wird, der z. B. aus der chemischen Gattung der Acrylate, der Thermoplaste oder Elastomere gebildet sein kann, aber auch aus Mischkomponenten hieraus.

Eine weitere Ausgestaltung des erfindungsgemäßen Gegenstandes besteht darin, die farbliche Ausbildung des textilen Gewebes durch unterschiedliche Farbgebung der einzelnen Garnfasern zu bewirken, wobei dann vorzugsweise das niedriger schmelzende Polymer weiß bzw. farblos ist. Eine weitere ästhetische Ausrichtung kann durch einen mindestens einseitigen Farbstoffauftrag erfolgen, der in Form des Bedruckens geschehen kann. Hier kann sowohl der Motivdruck als auch ein Streifendruck sowie ein Unidruck zur Ausführung kommen. Desweiteren umfaßt die Erfindung ein textiles Gewebe, welches eine ausgeprägte Motivstruktur aufweist, die mittels Durchlaufen einer Prägewalze bei erhöhter Temperatur verursacht wird.

Das Herstellungsverfahren folgt dem bekannten Stand der Technik. Zunächst wird aus den Polymerfasergarnen beispielsweise ein Gewebe hergestellt, das nach bekannten Verfahren gewaschen und getrocknet wird. Das trockene Gewebe wird sodann zum Appretieren an einem Foulard mit einer für die gewünschte Ausrichtung charakteristischen Imprägnierflotte behandelt und bei ca. 110-130° C, vorzugsweise ca. 120° C erneut getrocknet.

Der erfindungsgemäß eingesetzten Imprägnierflotte fehlen jedoch die im Stand der Technik verwendeten chemischen Zusatzstoffe für die Griffausrüstung und sie enthält lediglich noch eventuell Kunstharze für die Verbesserung der Wetterbeständigkeit, Netzmittel und Fungizide. Nach dem Trocknen und nach Verlassen des Foulard wird das imprägnierte Gewebe zusätzlich einem Temperprozeß unterzogen, worin die Aktivierung der Schmelzfaserkomponenten im Sinne einer Verschweißung mit dem Matrixpolymer zur Ausbildung der Griffversteifung erfolgt. Die dabei eingesetzte Temperatur liegt verfahrensgemäß im oberen Teil bzw. etwas oberhalb des Schmelztemperaturbereichs der eingesetzten Schmelzfaser, aber noch deutlich unterhalb des Maximums des Schmelztemperaturbereichs des Matrixpolymers. Bei der vorzugsweisen Verwendung von Polyolefinen wie Polypropylen und Polyethylen werden Temperaturen im Bereich von 110 bis 170° C eingesetzt, bei dem am meisten bevorzugten Schmelzpolymer Polyethylen zwischen 130 und 150° C, vorzugsweise ca. 145° C. In einer anderen Verfahrensweise erfolgt das Tempern unmittelbar nach dem Waschen und Trocknen des Gewebes, jedoch vor der Imprägnierung.
Das so erhaltene textile Gewebe weist dabei die mit einer gänzlich anderen Produktstruktur im Stand der Technik bekannten Gebrauchseigenschaften wie hohe Reißfestigkeit, textilen Charakter, gute Griffbeschaffenheit, gute Resistenz gegen Chemikalien, Farbechtheit, geringe Feuchtigkeitsaufnahme, geringen Schreibeffekt, geringen Weißbruch und anderes auf, ist dem Produkt nach dem Stand der Technik jedoch überlegen bei Eigenschaften wie schadstoffarmer bzw. -loser Verbrennung, Recyklierbarkeit (infolge Verwendung thermoplastischer Fasern), Umweltfreundlichkeit bei der Herstellung, Reduzierung der Abwasserbelastung (da keine oder nur wenig Lösungsmittel und keine Extender sowie Schwermetallkatalysatoren verwendet werden), sowie im Hinblick auf die gegenseitige Garnhaftung, verursacht durch den Schmelzkleber, und daraus nach DIN 53331 resultierend eine bessere Stichausreißkraft.

Die Erfindung wird im folgenden anhand der Gegenüberstellung zweier Beispiele näher erläutert.

Der Grad der Versteifung wir meßtechnisch anhand folgenden Verfahrens dargelegt.

Ein 2 cm breiter Streifen wird freihängend über eine Kante geschoben. Der auf einem waagerechten Tisch befindliche Teil des Streifens wird mit einem Gewicht, z. B. einem Holzklotz beschwert und jeweils bis zur Abknickkante abgedeckt. Das textile Gewebe wird so weit nach vorne freihängend hinausgeschoben, bis ein Abknickwinkel von 45 ° entsteht. Je größer nun die über die Abknickkante hinausragende freihängende Länge des Streifens ist, desto größer ist der Betrag der Versteifung des Streifens. Für ein Markisenmaterial, das aus Polyacrylnitrilgarn gemäß Stand der Technik hergestellt ist, ergibt sich mit dieser Methode eine Überhanglänge von ca. 15 cm, welche als Orientierung für die beim Verbraucher akzeptierte Griffestigkeit herangezogen werden kann.

In Beispiel 1 werden die Ergebnisse für ein erfindungsgemäßes textiles Gewebe mit einem Garn aus vorzugsweise 90 Gew. % Polypropylen-Fasern und 10 Gew.% Polyethylen-Fasern, besonders bevorzugt aus 95 Gew.-% Polypropylen-Fasern und 5 Gew.-% Polyethylen-Fasern wiedergegeben, in Beispiel 2 ein textiles Gewebe aus Polypropylen-Garn, dessen Griffestigkeit über eine Appretur gemäß dem Stand der Technik vermittelt wurde.

### Beispiel 1:

### Textiles Gewebe, bestehend aus:

30 Fäden /cm in der Kette
Zwirn aus Mischgarn 34/2; PP/PE 90/10 % bzw. 95/5%
Titer effektiv 590 dtex S 560
15 Fäden / cm im Schuß
Zwirn aus Mischgarn 34/2; PP/PE 90/10 % bzw. 95/5%
Titer effektiv 590 dtex S 560

| | |
|---|---|
| Bindung: | Leinwand l/l |
| Fertiggewicht: | 300g/m² |
| Breite: | 120 cm |
| Reißfestigkeit: | |
| Kette (daN/5 cm): | 240 |
| Schuß (daN/5 cm): | 130 |
| Dehnung: | |
| Kette (%) | 50 |
| Schuß (%) | 35 |

Die Hydrophobie wird durch die Ausrüstung erreicht.

### Imprägnierflotte:

30 g/l Fluorcarbon-Harze
10 g/l Netzmittel
20 g/l Fungizid
in Wasser

### Herstellungsverfahren:

1. Waschen und Trocknen des Gewebes
2. Imprägnieren am Foulard
3. Trocknen bei ca. 120° C
4. Tempern bei ca. 145° C
oder wahlweise
1. Waschen und Trocknen des Gewebes
2. Tempern und Fixieren bei ca. 145° C
3. Imprägnieren am Foulard
4. Trocknen bei ca. 120° C und Kondensieren

| Meßergebnisse für Griffestigkeit: bei Stapelfaserzwirn aus PP/PE 90/10 in Kett- und Schußrichtung | | |
|---|---|---|
| | roh | fertig |
| freie Überhanglänge Kette | 4 cm | 12 cm |
| freie Überhanglänge Schuß | 4 cm | 14 cm |

### Beispiel 2:

### Textiles Gewebe:

Gewebe gemäß Beispiel 1 jedoch ohne Polyethylen.

Die Imprägnierflotte wies folgende Zusammensetzung auf:
60 g/l Knittex TC (für die Griffausrüstung)
40 g/l Vibatex KN neu (für die Griffausrüstung)
30 g/l Oleophobol S (ein Fluorcarbon-Harz als wasserabweisendes Mittel)
20 g/l Fungitex OP (Fungizid)
10 g/l Invadin PBN (als Netzmittel)
6 g/l Knittex-KAT F (als Katalysator für die Griffausrüstung)
1 ml/l Essigsäure (für die pH-Stabilität der Flotte) in Wasser.

In der folgenden Tabelle 1 werden die freien Überhanglängen als Parameter für den Grad der Versteifung für Gewebe aus Polypropylen-Fasergarnen dargestellt.

**Tabelle 1**

| Überhanglänge Meßergebnisse für Griffestigkeit | | |
|---|---|---|
| | roh | fertig |
| freie Überhanglänge Kette | 3,8 | 11,3 |
| freie Überhanglänge Schuß | 3,8 | 10,5 |

Wie aus dem Vergleich ersichtlich wird, kann eine Überhanglänge von 15 cm, wie sie für eine für Polypropylen erforderliche Verbraucherakzeptanz nötig wäre, nach dem Verfahren gemäß Stand der Technik nicht erreicht werden.

In Tabelle 2 werden jeweils die für die Stichausreißkraft ermittelten Werte von Geweben aus Polyacrylnitril (PAN)-Garnen den entsprechenden Werten von Geweben aus Polypropylen/Polyethylen-Garnen bzw. aus reinen Polypropylengarnen gegenübergestellt.

**Tabelle 2**

| Vergleich: Polyacrylnitril (PAN) zu Polypropylen (PP-Markise) | | |
|---|---|---|
| Ermittlung der Stichausreißkfraft nach DIN 53 331 | | |
| Material | Stichausreißkraft (N) | |
| | Kettrichtung | Schußrichtung |
| PAN-Markise Mehler Dessin 6001 grün/weiß | 36 | 32 |
| PP-Markise Mehler Dessin 9360 braun, mit Polyethylen-Anteil | 110 | 170 |
| PP-Markise Mehler Dessin 9329 blau, reines PP ohne Polyethylen-Anteil | 144 | 190 |

## Patentansprüche

1. Textiles Gewebe für Markisen, Zelte, Schirme, Persennings und dergleichen aus Kunststoff-Stapelfasergarn oder daraus gefertigtem Zwirn, mit hoher Umweltverträglichkeit bei Gebrauch und Entsorgung sowie mit hoher Recyclingfähigkeit,
dadurch gekennzeichnet, daß das Stapelfasergarn bzw. der Zwirn in Form einer intimen Mischung aus Matrixfasern mit verschweißenden Schmelzfasern aufgebaut ist, wobei die Matrixfasern aus Polyolefin bestehen und die Schmelzfasern aus einem oder mehreren unterschiedlichen thermoplastischen Polymeren mit im Vergleich zu dem Matrixpolymer niedrigeren Schmelztemperaturbereich, wobei der gewichtsprozentuale Anteil des Polyolefin-Matrixpolymers größer ist als der gewichtsprozentuale Anteil des Schmelzpolymers.

2. Gewebe nach Anspruch 1, dadurch gekennzeichnet, daß das die Schmelzfaser aufbauende Polymer ebenfalls ein Polyolefin, vorzugsweise Polyethylen ist.

3. Gewebe nach Anspruch 1, dadurch gekennzeichnet, daß das die Schmelzfaser aufbauende Polymer ein anderes thermoplastisches Polymer als Polyolefin ist, vorzugsweise Polyamid, Polyester oder Copolymere daraus.

4. Gewebe nach jedem der Ansprüche 1-3, dadurch gekennzeichnet, daß das die Matrixfaser aufbauende Polymer Polypropylen ist.

5. Gewebe nach den Ansprüchen 1, 2 und 4, dadurch gekennzeichnet, daß es aus einem Garn bestehend aus 80-98 Gew.-% Polypropylen-Fasern und 20-2 Gew.-% Polyethylen-Fasern aufgebaut ist, vorzugsweise aus 90-95 Gew.-% Polypropylen-Fasern und 10-5 Gew.-% Polyethylen-Fasern.

6. Gewebe nach jedem der Ansprüche 1-5, dadurch gekennzeichnet, daß die Fasern des Gewebes zusätzlich zu der Polymersubstanz noch metallische Komponenten enthalten.

7. Gewebe nach jedem der Ansprüche 1-6, dadurch gekennzeichnet, daß es zur Verbesserung der Wetterbeständigkeit mit Hydrophobierungsmitteln allein oder in Kombination mit Extendern behaftet ist.

8. Gewebe nach jedem der Ansprüche 1-7, dadurch gekennzeichnet, daß es mindestens einseitig mit einem Polymerfilm aus der Gruppe der Acrylate, Thermoplaste oder Elastomere abgedeckt ist.

9. Gewebe nach jedem der Ansprüche 1-8, dadurch gekennzeichnet, daß es mit einem Kunstharzauftrag aus der Gruppe der Fluorcarbonharze, Melaminharze, Carbamidharze sowie deren Derivaten und Mischungen oder aus der Gruppe Acrylate, Polyurethane und Polyvinylacetate sowie deren Derivaten und Mischungen versehen ist.

10. Gewebe nach jedem der Ansprüche 1-9, dadurch gekennzeichnet, daß die Garne aus farblosen oder spinngefärbten Fasern gleicher oder unterschiedlicher Farbe bestehen.

11. Gewebe nach Anspruch 10, dadurch gekennzeichnet, daß das niedriger schmelzende Polymer in dem Garn weiß oder farblos ist.

12. Gewebe nach jedem der Ansprüche 1-10, dadurch gekennzeichnet, daß es mindestens einseitig mit Farbstoffen bedruckt ist.

13. Gewebe nach jedem der Ansprüche 1-12, dadurch gekennzeichnet, daß es eine eingeprägte Motivstruktur aufweist.

14. Gewebe nach jedem der Ansprüche 1-13, dadurch gekennzeichnet, daß in Kett- und/oder Schußrichtung ein Schrumpfgarn eingesetzt ist, welches im Temperaturbereich von 110-170° C einen Schrumpf von 3-12 % aufweist.

15. Verfahren zur Herstellung eines Gewebes nach den Ansprüchen 1-14, in den Schritten
- Herstellung eines Gewebes unter Verwendung von Garnen aus Polyolefin,
- Waschen und Trocknen des so erhaltenen Gewebes,
- Imprägnieren des Gewebes in einer Imprägnierflotte mit chemischen Substanzen für die erwünschte Ausrüstung und Konfektionierung des Gewebes,
- Trocknen und Kondensieren des imprägnierten Gewebes,
wobei
- Polymermatrixfasern aus Polyolefin zuvor mit Schmelzfasern aus einem oder mehreren thermoplastischen Polymer(en) mit einem Schmelztemperaturbereich unterhalb des Schmelztemperaturbereichs der Matrixfasern zu dem das Gewebe aufbauenden Garn versponnen werden, wobei die Matrixfasern aus Polyolefinen in einem Anteil von über 50 Gew.-% vorzugsweise 80-98 Gew.-% und besonders bevorzugt 90-95 Gew.-% eingesetzt werden,
- eine Imprägnierflotte verwendet wird, die keine chemischen Substanzen für die Griffausrüstung enthält, und
- das getrocknete Gewebe vor oder nach dem Imprägnieren zusätzlich einer thermischen Behandlung unterzogen wird, bei welcher zur Ausrüstung der Griffbeschaffenheit das Gewebe einem Temperprozeß bei einer Temperatur unterzogen wird welche oberhalb des Schmelztemperaturbereichs der eingesetzten Schmelzfasern und unterhalb des Maximums für den Schmelztemperaturbereich für das die Polymermatrixfaser aufbauende Polyolefin liegt.

16. Verfahren nach Anspuch 15, dadurch gekennzeichnet, daß eine Polymermatrixfaser aus Polypropylen verwendet wird, wobei die Temperung bevorzugt bei einer Temperatur von ca. 110-150°C erfolgt, und als Polymer für die Schmelzfaser Polyethylen, Polyamid, Polyester oder Copolymere verwendet werden.

## Claims

1. Textile fabric for marquees, tents, shades, tarpaulins, and similar items, made of plastic staple fibre yarn or twist manufactured from this, with a high degree of environmental compatibility for use and disposal, as well as high recycling capability, characterised by the fact that the staple fibre yarn and the twist respectively are built up in the form of an intimate mixture of matrix fibres with heat-sealed fusion fibres, in which context the matrix fibres consist of polyolefin, and the fusion fibres consist of one or more different thermoplastic polymers, with a lower temperature range in comparison with the matrix polymer, in which context the percentage by weight of the polyolefin matrix polymer is greater than the percentage by weight of the fusion polymer.

2. A fabric according to Claim 1, characterised by the fact that the polymer which forms the fusion fibre is likewise a polyolefin, and for preference is polyethylene.

3. A fabric according to Claim 1, characterised by the fact that the polymer which form the fusion fibres is a polymer other than polyolefin, and for preference is polyamide, polyester, or a copolymer thereof.

4. A fabric according to each of Claims 1-3, characterised by the fact that the polymer which forms the matrix fibre is polypropylene.

5. A fabric according to Claims 1, 2, and 4, characterised by the fact that it is formed from a yarn consisting of 80-98 percent by weight polypropylene fibres and 20-2 percent by weight polyethylene fibres, and for preference from 90-95 percent by weight polypropylene fibres and 10-5 percent by weight polyethylene fibres.

6. A fabric according to each of Claims 1-5, characterised by the fact that the fibres of the fabric, in addition to the polymer substance, also contains metallic components.

7. A fabric according to each of Claims 1-6, characterised by the fact that, in order to improve the resistance to weathering, it is bonded with water-repellant agents, either alone or in combination with extenders.

8. A fabric according to each of Claims 1-7, characterised by the fact that it is coated on at least one side with a polymer film from the group of the acrylates, thermoplastics, or elastomers.

9. A fabric according to one of Claims 1-8, characterised by the fact that it is provided with an artificial resin coating from the group of the fluorocarbon resins, melamine resins, carbamide resins, and the derivatives and mixtures thereof, or from the group of acrylates, polyurethanes, and polyvinyl acetates, and the derivatives and mixtures thereof.

10. A fabric according to each of Claims 1-9, characterised by the fact that the yarns consist of colourless or dope-dyed fibres of the same or different colour.

11. A fabric according to Claim 10, characterised by the fact that the lower melting polymer in the yarn is white or colourless.

12. A fabric according to each of Claims 1-10, characterised by the fact that it is printed on at least one side with dyeing agents.

13. A fabric according to each of Claims 1-12, characterised by the fact that it features an imprinted motif structure.

14. A fabric according to each of Claims 1-13, characterised by the fact that a shrink yarn is used in the warp and/or weft direction, which features a shrinkage of 3-12 % in the temperature range from 110-170 °C.

15. A process for the manufacture of a fabric according to Claims 1-14, in the stages:
- Manufacture of a fabric using a yarn made of polyolefin,
- Washing and drying the fabric thus obtained,
- Impregnation of the fabric in an impregnation liquor with chemical substances for the desired finishing and make-up of the fabric,
- Drying and condensing of the impregnated fabric,
- Polymer matric fibres made of polyolefin, initially with fusion fibres made of one or more polymer(s) with a fusion temperature range below the fusion temperature rage of the matrix fibres, to which the yarn forming the fabric is spun, in which context the matrix fibres made of polyolefins are used in a proportion of over 50 percent by weight, and for preference 80-98 percent by weight, and, for particular preference, 90-95 percent by weight,
- An impregnation liquor is used which contains no chemical substances for the handle finish, and
- The dried fabric is additionally subjected, before or after impregnation, to thermal treatment, in which the fabric undergoes a tempering process for finishing the handle quality of the fabric, at a temperature which is above the fusion temperature range of the fusion fibres used, and below the maximum for the fusion temperature range for the polyolefin which forms the polymer matrix fibre.

16. A process according to Claim 15, characterised by the fact that a polymer matrix fibre made of polypropylene is used, in which context the tempering process is carried out for preference at a temperature of approx. 110-150 °C, and the polymer used for the fusion fibres is polyethylene, polyamide, polyester, or copolymers.

## Revendications

1. Tissu textile pour des marquises, des tentes, des parapluies ou des parasols, des prélarts et analogues, constitué par des fils de fibres discontinues en matière synthétique ou par du fil retors réalisé à partir de ces derniers, présentant une non-pollution élevée lors de l'utilisation et de l'élimination, ainsi qu'une aptitude élevée au recyclage,
caractérisé en ce que le fil en fibres discontinues, respectivement le fil retors, est obtenu sous la forme d'un mélange intime de fibres matricielles avec des fibres fusibles qui se soudent, les fibres matricielles étant constituées par de la polyoléfine et les fibres fusibles étant constituées par un ou plusieurs polymères thermoplastiques différents possédant un domaine de température de fusion inférieur par rapport à celui du polymère matriciel, la fraction en pour cent en poids du polymère matriciel de polyoléfine étant supérieure à la fraction en pour cent en poids du polymère fusible.

2. Tissu selon la revendication 1, caractérisé en ce que le polymère constituant les fibres fusibles est également une polyoléfine, de préférence du polyéthylène.

3. Tissu selon la revendication 1, caractérisé en ce que le polymère constituant la fibre fusible est un polymère thermoplastique différent de la polyoléfine, de préférence du polyamide, du polyester ou des copolymères de ces derniers.

4. Tissu selon chacune des revendications 1 à 3, caractérisé en ce que le polymère constituant la fibre matricielle est le polypropylène.

5. Tissu selon les revendications 1, 2 et 4, caractérisé en ce qu'il est constitué par un fil constitué par des fibres de polypropylène à concurrence de 80-98% en poids et par des fibres de polyéthylène à concurrence de 20-2% en poids, de préférence par des fibres de polypropylène à concurrence de 90-95% en poids et par des fibres de polyéthylène à concurrence de 10-5% en poids.

6. Tissu selon chacune des revendications 1 à 5, caractérisé en ce que les fibres du tissu contiennent, en plus de la substance polymère, encore des composants métalliques.

7. Tissu selon chacune des revendications 1 à 6, caractérisé en ce que, pour améliorer la résistance aux intempéries, il contient, à titre de matières de remplissage, des agents qui rendent hydrophobe, seuls ou en combinaison avec des diluants.

8. Tissu selon chacune des revendications 1 à 7, caractérisé en ce qu'il est recouvert, au moins d'un côté, par un film polymère choisi parmi le groupe des acrylates, des composés thermoplastiques ou des élastomères.

9. Tissu selon chacune des revendications 1 à 8, caractérisé en ce qu'il est muni d'un revêtement de résine synthétique choisie parmi le groupe comprenant des résines de fluorocarbone, des résines de mélamine, des résines de carbamide, ainsi que leurs dérivés et leurs mélanges, ou encore parmi le groupe comprenant les acrylates, les polyuréthannes et les acétates de polyvinyle, ainsi que leurs dérivés et leurs mélanges.

10. Tissu selon chacune des revendications 1 à 9, caractérisé en ce que les fils sont constitués par des fibres incolores ou par des fibres colorées dans la masse à l'aide d'une couleur identique ou de couleurs différentes.

11. Tissu selon la revendication 10, caractérisé en ce que le polymère à point de fusion inférieur dans le fil est blanc ou incolore.

12. Tissu selon chacune des revendications 1 à 10, caractérisé en ce qu'il est imprimé au moins d'un côté avec des colorants.

13. Tissu selon chacune des revendications 1 à 12, caractérisé en ce qu'il présente une structure de motifs imprimée.

14. Tissu selon chacune des revendications 1 à 13, caractérisé en ce qu'un fil apte au retrait est inséré dans la direction de la chaîne et/ou de la trame, qui présente, dans le domaine de température de 110-170°C, un retrait de 3-12%.

15. Procédé pour la confection d'un tissu selon les revendications 1-14, comprenant les étapes consistant à:
- confectionner un tissu en utilisant des fils en polyoléfine,
- laver et sécher le tissu ainsi obtenu,
- imprégner le tissu dans un bain d'imprégnation avec des substances chimiques pour obtenir le finissage et la présentation désirés du tissu,
- sécher et condenser le tissu imprégné,
dans lequel
- on file des fibres matricielles polymères constituées par de la polyoléfine au préalable avec des fibres fusibles constituées par un ou plusieurs polymères thermoplastiques dont le domaine de température de fusion est inférieur au domaine de température de fusion des fibres matricielles pour obtenir le fil constituant le tissu, en mettant en oeuvre les fibres matricielles constituées par des polyoléfines en une fraction supérieure à 50% en poids, de préférence à concurrence de 80 à 98% en poids, de manière particulièrement préférée de 90 à 95% en poids,
- on utilise un bain d'imprégnation qui ne contient pas de substances chimiques pour l'obtention du toucher, et
- on soumet le tissu séché, avant ou après l'imprégnation, en outre à un traitement thermique dans lequel, pour le finissage procurant la qualité de toucher, on soumet le tissu à un traitement thermique à une température qui se situe au-dessus du domaine de température de fusion des fibres fusibles mises en oeuvre et en dessous du maximum du domaine de température de fusion pour la polyoléfine constituant les fibres matricielles polymères.

16. Procédé selon la revendication 15, caractérisé en ce qu'on utilise une fibre matricielle polymère constituée par du polypropylène, le traitement thermique étant réalisé de préférence à une température d'environ 110-150°C, et on utilise comme polymère pour les fibres fusibles, du polyéthylène, du polyamide, du polyester ou des copolymères de ces derniers.
